# EUROPEAN PATENT APPLICATION

(11) **EP 1 876 413 A2**
(43) Date of publication of application: **09.01.2008**
(21) Application number: 07111907.7
(22) Date of filing: 06.07.2007
(51) Int. Cl.: G01C 3/00, G01C 15/00, G01S 11/12

(54) **Passive-optical locator**

(30) Priority: 07.07.2006 US 482468
(71) Applicant: Honeywell International Inc., Morristown, NJ 07962 (US)
(72) Inventor: Ash, William M., Largo, FL 33773 (US)
(74) Representative: Haley, Stephen

(57) **Abstract**

A system (10) comprising a passive-optical locator (32) to generate information indicative of an absolute location associated with a target (50) and a remotely controlled actuator (200). The passive-optical locator (32) comprises a passive-optical range-finder (85) to generate information indicative of a distance (R) to the target (50) and at least one sensor (60) to generate information indicative of an azimuth and an elevation of an optical axis of the passive optical range-finder. The passive-optical locator (32) uses information indicative of a geographic location associated with the passive-optical locator (32), the information indicative of the distance (R) to the target (50), and the information indicative of the azimuth and the elevation of the optical axis to determine information indicative of an absolute location associated with the target (50). The remotely controlled actuator (200) is mechanically coupled to the passive-optical locator (32) and remotely positions an optical axis of the passive-optical locator (32) in accordance with one or more operation instructions received at the system (10).

## Description

During some military operations, one or more soldiers locate targets to be fired upon by, for example, indirect fire systems or air support and transmit a geographic location for the target to a fire control center or to an integrated tactical network. The fire control center or integrated tactical network then deploys a strike on the target using the target geographic location. Target designators are used by military personnel to determine the geographical coordinates of a target. One type of target designator is designed so that an operator is able to shine a laser at a target and to receive light scattered and/or reflected from the target in order to determine the geographical coordinates of the target.

Such lasers, however, are typically detectable by enemy sensors, which detect the laser light and set off alarms. In some cases, once the enemy realizes the target geographic location is being determined, the target is moved, hidden and/or hardened. Additionally, the enemy can sometimes trace the optical beam back to the operator of the target designator. In this case, the operator can become a target of the enemy.

Moreover, the divergence of the laser beam used in such target designators limits the range of such target designators. If the range is too large, the spot size of the laser becomes too large for range determination. Thus, with some such target designators, the operator must be within 10,000 meters for ranging, and 5000 meters for proper designation of the target, which can place the operator in tactical danger. Timing, coordination and lethality are of the essence for combined arms operations, particularly for non-organic fire support/air operations. It is highly desirable for the combat team to engage targets at the farthest practical range possible.

Furthermore, there are safety issues associated with target designators that use lasers in this way. If the operator or other soldiers near the target designator look directly into the laser, their retina can be burned and/or their vision otherwise impaired.

A first aspect of the present invention provides a system comprising a passive-optical locator to generate information indicative of an absolute location associated with a target and a remotely controlled actuator. The passive-optical locator comprises a passive-optical range-finder to generate information indicative of a distance to the target and at least one sensor to generate information indicative of an azimuth and an elevation of an optical axis of the passive optical range-finder. The passive-optical locator uses information indicative of a geographic location associated with the passive-optical locator, the information indicative of the distance to the target, and the information indicative of the azimuth and the elevation of the optical axis to determine information indicative of an absolute location associated with the target. The remotely controlled actuator is mechanically coupled to the passive-optical locator and remotely positions an optical axis of the passive-optical locator in accordance with one or more operation instructions received at the system.

A second aspect of the present invention provides a method comprising receiving operation instructions at a passive-optical locator, positioning an optical axis of the passive-optical locator and generating an absolute location of a target responsive to the operation instructions.

A third aspect of the present invention provides a system comprising a passive-optical locator and a remotely controlled actuator that is controlled by one or more operation instructions received at the system. The passive-optical locator generates information indicative of an absolute location associated with a target. The passive-optical locator comprises a passive-optical range-finder to generate information indicative of a distance to the target; and a sensor to generate information indicative of an azimuth and an elevation of an optical axis of the passive optical range-finder. The passive-optical locator uses information indicative of a geographic location associated with the passive-optical locator, the information indicative of the distance to the target, and the information indicative of the azimuth and the elevation of the optical axis to determine information indicative of an absolute location associated with the target. The remotely controlled actuator is mechanically coupled to the passive-optical locator to remotely position an optical axis of the passive-optical locator in response to at least one of the operation instructions.

### IN THE DRAWINGS

Figure 1 is a block diagram of a first embodiment of a system that uses a passive-optical locator.

Figure 2 shows a block diagram in which the passive-optical locator moves toward a first remote location.

Figure 3 is a flowchart of one embodiment of a method of determining an absolute location of a target and for displaying images of the target at a remote location.

Figure 4 is a block diagram of an implementation of the passive-optical locator in a locale.

Figures 5A-5B are sequential images of an exemplary locale.

Figure 6 is a flowchart of one embodiment of a method of transmitting information indicative of an unpredicted change in the locale and for displaying images of the locale at a remote location.

The various described features are not drawn to scale but are drawn to emphasize features relevant to the subject matter described. Reference characters denote like elements throughout the figures and text.

In the following detailed description, reference is made to the accompanying drawings that form a part hereof, and in which is shown by way of illustration specific illustrative embodiments in which the claimed invention may be practiced. These embodiments are described in sufficient detail to enable those skilled in the art to practice the claimed invention, and it is to be understood that other embodiments may be utilized and that logical, mechanical, and electrical changes may be made without departing from the scope of the claimed invention. The following detailed description is, therefore, not to be taken in a limiting sense.

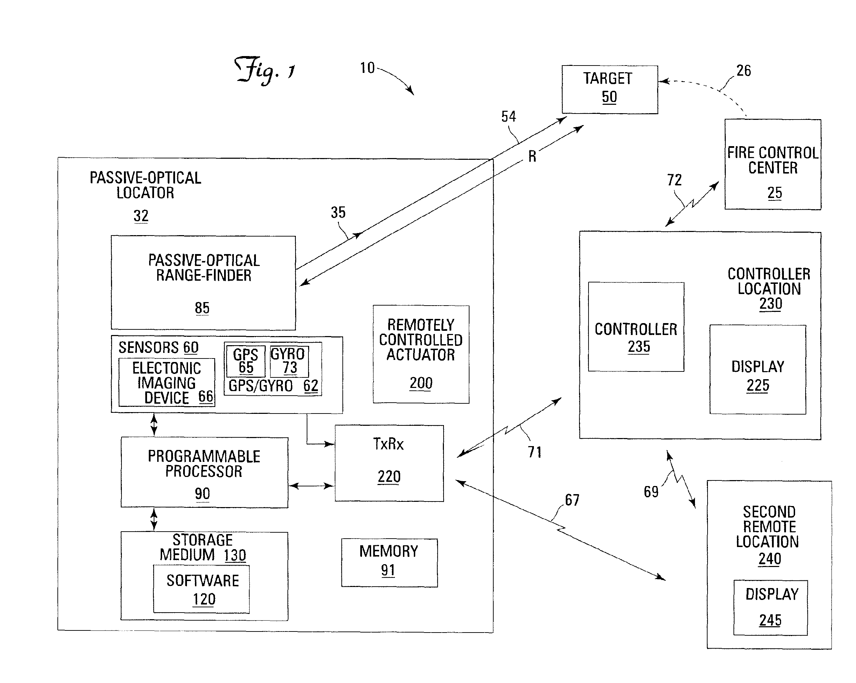

Figure 1 is a block diagram of a one embodiment of a system 10 that uses a passive-optical locator 32. The passive-optical locator 32 includes a remotely controlled actuator 200 under the control of a controller 235 at a remote controller location 230. The remotely-controlled actuator 200 receives one or more operation instructions from the controller 235. The passive-optical locator 32 includes a passive-optical range-finder 85, at least one sensor 60, a wireless transceiver 220, a programmable processor 90, a memory 91 and software 120 stored or otherwise embodied in or on a storage medium 130.

In the embodiment shown in Figure 1, the passive-optical locator 32 is deployed in a military application in which the passive-optical locator 32 operates as a laser-free passive-optical locator that is used in conjunction with a remotely controlled actuator 200 to determine the geographic location of a target 50.

The sensors 60 include a global positioning system/gyroscope (GPS/GYRO) device or subsystem 62, and an electronic imaging device or subsystem 66. The GPS/GYRO device 62 comprises one or more gyroscopic devices (GYRO) 73 integrated with a global positioning system (GPS) 65.

The programmable processor 90 executes software 120 and/or firmware that causes the programmable processor 90 to perform at least some of the processing described here as being performed by the passive-optical locator 32. At least a portion of such software 120 and/or firmware executed by the programmable processor 90 and any related data structures are stored in memory 91 during execution. Memory 91 comprises any suitable memory now known or later developed such as, for example, random access memory (RAM), read only memory (ROM), and/or registers within the programmable processor 90. In one implementation, the programmable processor 90 comprises a microprocessor or microcontroller. Moreover, although the programmable processor 90 and memory 91 are shown as separate elements in Figure 1, in one implementation, the programmable processor 90 and memory 91 are implemented in a single device (for example, a single integrated-circuit device). The software 120 and/or firmware executed by the programmable processor 90 comprises a plurality of program instructions that are stored or otherwise embodied on a storage medium 130 from which at least a portion of such program instructions are read for execution by the programmable processor 90. In one implementation, the programmable processor 90 comprises processor support chips and/or system support chips such as ASICs.

The various components of the passive-optical locator 32 are communicatively coupled to one another as needed using appropriate interfaces (for example, using buses, traces, cables, wires, ports, wireless transceivers and the like). The remotely controlled actuator 200 is mechanically coupled to the passive-optical range-finder 85 in the passive-optical locator 32 using appropriate interfaces (for examples, gears, gear boxes, chains, cams, electro-magnetic devices, hydraulic, gas-pressure devices and piezoelectric, chemical and/or thermal devices. The passive-optical range-finder 85 generates information indicative of a distance R from the passive-optical locator 32 to a target 50. This information is also referred to here as "distance information." The passive-optical range-finder 85 generates the distance R in a passive optical manner in which the target 50 is not illuminated with a laser. In other embodiments, the passive-optical range-finder 85 is implemented in other ways, for example, using a passive auto-ranging range-finder, a tilted image plane sensor range-finder, a depth-of-focus range-finder, Charged Coupled Devices (CCD), Active Pixel Sensors (APS), and night vision capability with technologies like an infra-red imaging viewer, or a light intensification imaging viewer. In one implementation of this embodiment, the passive-optical range-finder 85 comprises an image-coincidence range finder. Examples of a commercially available electronic imaging device 66 are the Sony ICX428AKL CCD Image Sensor, the MT9D112 SOC COMS Image Sensor, and the CIDTEC Spectra CAM.

In one implementation, the distance information generated by the passive-optical range-finder 85 is used to generate a distance R between the passive-optical locator 32 and the target 50. The designation, ranging and range accuracy are limited by the quality and capability of the optics and the accuracy of the coordinate system and its transforms. As used herein, the passive-optical range-finder 85 is referred to as being "focused" or "in focus" when the passive-optical range-finder 85 is optically configured or otherwise adjusted so as to measure properly the distance R between the passive-optical range-finder 85 and the target 50.

The electronic imaging device 66 in sensors 60 generates or otherwise outputs information indicative of an image of the target 50 when the passive-optical range-finder 85 is in focus. Such information is also referred to here as "target-image information."

The one or more gyroscopic devices 73 in the GPS/GYRO device 62 generate information indicative of an azimuth θ and an elevation φ of an optical axis 35 of the passive-optical range-finder 85. Such information is also referred to here as "azimuth and elevation information." In Figure 1, only one such gyroscopic device 73 is shown though it is to be understood that one or more gyroscopic devices 73 are used in various implementations of such an embodiment. In one implementation of such an embodiment, gyroscopic device 73 comprises an inertial navigation system that generates the azimuth and elevation information. In another implementation of such an embodiment, the gyroscopic device 73 comprises an accelerometer.

The GPS 65 in the GPS/GYRO device 62 generates or otherwise outputs information indicative of an absolute location associated with the passive-optical locator 32. Such information is also referred to here as "GPS information." In one implementation of such an embodiment, the GPS information associated with the passive-optical locator 32 comprises the latitude Lat_{L}, the longitude Long_{L}, and the attitude Alt_{L} of the passive-optical locator 32. The GPS 65 comprises various GPS implementations such as Differential GPS (DGPS). Although the gyroscopic device 73 and the global positioning system 65 are shown in Figure 1 as a single, integrated device GPS/Gyro device 62, in other implementations the global positioning system 65 and the gyroscopic device 73 are implemented using two more separate devices. The software 120 and/or firmware executing on the programmable processor 90 processes the GPS information, the distance information, and the azimuth and elevation information in order to determine information indicative of an absolute location associated with the target 50 (also referred to here as the "target location information"). The target location information is defined by a latitude Lat_{T}, a longitude Long_{T}, and a altitude Alt_{T} of the target 50. The target location information is generated using one or more trigonometric relationships between the distance R between the passive-optical range-finder 85 and the target 50, the azimuth θ, and the elevation φ of the optical axis 35 of the passive-optical range-finder 85, and the absolute location of the passive-optical locator 32. In one implementation, such trigonometric relationships are established and/or corrected using the calibration techniques described in the H0008552 Application.

In another implementation of this embodiment, the electronic imaging device 66 includes man-packed imaging devices. In yet another implementation of this embodiment, the electronic imaging device 66 implements image enhancement, processing, regeneration and machine aided target ranging and/or identification. In yet another embodiment, the position/attitude/pointing sensor implements sensor suites that include magnetic compasses, level detectors, accelerometers, pointing feedback loops, odometers, and the like to perform the function of the GPS/GYRO device 62 in directly coupled system configurations, loosely coupled system configurations, or non-coupled system configurations.

In one implementation of the embodiment of the passive-optical locator 32 of Figure 1, the programmable processor 90 outputs the target location information associated with the target 50 for transmission by the wireless transceiver 220. In one implementation of this embodiment, the wireless transceiver 220 transmits the target location information to the controller 235 at the controller location 230 for display on the display 225. The controller location 230 is referred to here as "remote location 230" and "first remote location 230."

The display 225 provides a visual indication of the absolute location of the target 50 for the operator of the controller 235 at the remote location 230. In one implementation of such an embodiment, the display 225 shows the values for the target latitude Lat_{T}, target longitude Long_{T}, and target altitude Alt_{T}. In another implementation, the display 225 shows the values for the distance R, the azimuth θ and the elevation φ from the passive-optical locator 32. In other implementations, information indicative of the absolute location of the target 50 is displayed in other ways.

In another implementation of this embodiment, the programmable processor 90 outputs the target-image information to the controller 235 at the controller location 230 for display on the display 225. The display 225 provides a visual image of the target 50 for the operator of the controller 235 at the remote location 230

In yet another implementation of the embodiment of the passive-optical locator 32 of Figure 1, the wireless transceiver 220 transmits the target location information to a second remote location 240 for display on the display 245. The display 245 provides a visual indication of the absolute location of the target 50 for the operator of the display 245 at the second remote location as described above.

In the embodiment shown in Figure 1, the wireless transceiver 220 communicates at least a portion of the information indicative of the absolute location of the target 50 and/or the information indicative of the image of the target 50 from the passive-optical locator 32 to the remote controller 235 over a communication link 71. The communication link 71 comprises one or more of a wireless communication link (for example, a radio-frequency (RF) communication link). For applications of such an embodiment in which secure communication is desired, one or more appropriate protocols for automation, encryption, frequency hopping, and spread-spectrum concealment are used in communicating such information from the passive-optical locator 32 and the controller 235.

In one implementation of such an embodiment, the target location information and/or target-image information are communicated from the passive-optical locator 32 to the controller 235 via wireless transceiver 220 and the communication link 71. In such an implementation, a processor is included in the controller 235 to executes software (not shown in the controller location 230) to process such target location information and/or target-image information. In another implementation of this embodiment, the controller 235 executes software (not shown in the controller location 230) to process target-image information in order to display and/or enhance portions of an image of the target 50 on the display 225.

In an alternative embodiment, the target location information is not generated at the passive-optical locator 32. Instead, the distance information, azimuth and elevation information, and GPS information is communicated from the passive-optical locator 32 via the wireless transceiver 220 to the remote controller 235 and the remote controller 235 generates the absolute location associated with the target 50 using such distance information, azimuth and elevation information, and GPS information (for example, using software executing on a processor (not shown) of the controller 235).

In the embodiment shown in Figure 1, the remote controller 235 is part of an integrated tactical network. The integrated tactical network comprises a wide area network (WAN) used for communications, command, control, and intelligence functions for military operations. The integrated tactical network integrates the indirect fire control centers 25 and forward air controllers to direct fire missions and air strikes. As shown in Figure 1, the remote controller 235 is part of an integrated tactical network. The remote controller 235 communicates the target location information and/or target-image information for the target 50 to a fire control center 25 over a communication link 72. The fire control center 25 is operable to deploy a weapon (not shown) on a trajectory 26 towards the target 50.

In another implementation of this embodiment, the remote controller 235 communicates the target location information and/or target-image information for the target 50 to a display 245 in a second remote location over a communication link 69. In another implementation of this embodiment, the wireless transceiver 220 communicates the target location information and/or target-image information for the target 50 to the display 245 in a second remote location over a communication link 67. In yet another implementation of this embodiment, the passive-optical locator 32 includes a display.

In one implementation, the passive-optical locator 32 and the remotely controlled actuator 200 are mounted on a remotely controlled land vehicle. In another implementation, the passive-optical locator 32 and the remotely controlled actuator 200 are mounted on a remotely controlled airborne vehicle. For example, the passive-optical locator can be included in an aircraft that is lighter than air, such as a balloon. In yet another implementation, the passive-optical locator 32 and the remotely controlled actuator 200 are mounted on a remotely controlled water-based vehicle. For example, the passive-optical locator can be included in a buoy or another wind powered or tidal powered craft.

The communication links 67, 69, 72 comprise one or more of a wireless communication link (for example, a radio-frequency (RF) communication link) and/or a wired communication link (for example, an optical fiber or copper wire communication link). For applications of such an embodiment in which secure communication is desired, one or more appropriate protocols for automation, encryption, frequency hopping, and spread-spectrum concealment are used in communicating such information from the controller 235 to the fire control center 25. In another implementation of this embodiment, the communication links 67, 69, 72 comprise acoustic links. The autonomy of the remotely controlled passive-optical locator 32 extends over wide range from a "dumb" servomechanism to a fully autonomous unit.

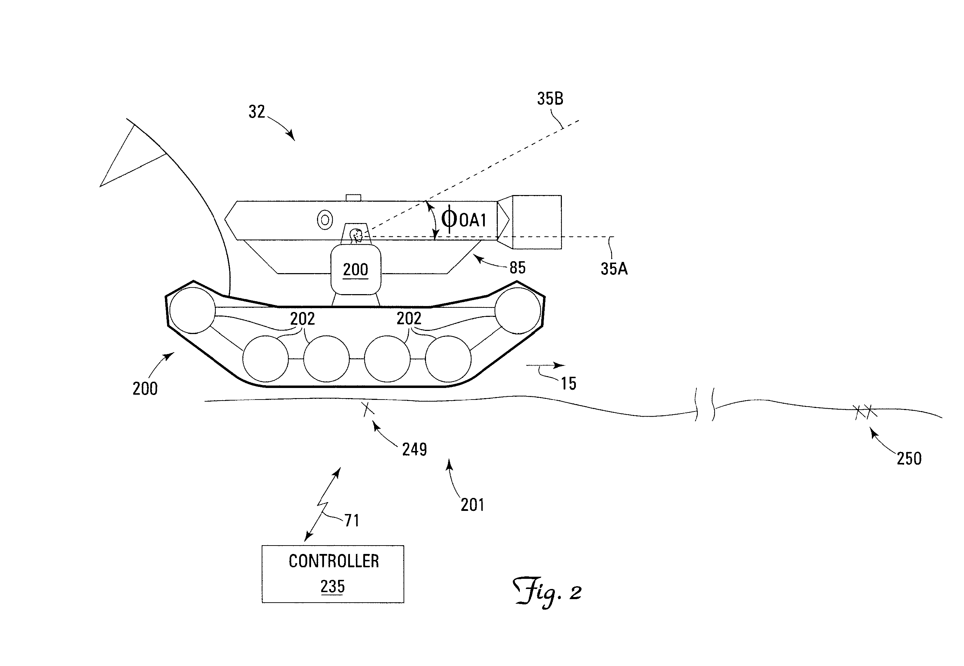

Figure 2 shows a block diagram in which the passive-optical locator 32 moves toward a first remote location 250. The controller 235 remotely located from the passive-optical locator 32, transmits operation instructions to the passive-optical locator 32 via communication link 71. The remotely controlled actuator 200 is mechanically coupled to the passive-optical locator 32 to remotely position an optical axis 35 of the passive-optical locator 32 in response to at least one of the operation instructions received from the controller 235.

The passive-optical locator 32 is in a land vehicle 201 that comprises wheels 202 as a portion of a robotic housing 210 that are mechanically coupled to remotely controlled actuator 200. The passive-optical range-finder 85 is mechanically coupled to the remotely controlled actuator 200. In one implementation of this embodiment, the remotely controlled actuator 200 is mechanically coupled the portion of the robotic housing 210 in order to propel the components housed in and/or on the robotic housing 210 in a lateral movement from location generally represented by an X 249 to location generally represented by XX 250. The wheels 202 are mechanically linked to the remotely controlled actuator 200. In this case, the remotely controlled actuator 200 turns the wheels 202 and the robotic housing 210 goes forward or backward. Additionally, the remotely controlled actuator 200 operates the land vehicle so at least one axel (not shown) holding the wheels 202 rotates and the robotic housing 210 turns as it goes forward or backward.

In one implementation of this embodiment, the passive-optical locator 32 is self-propelled. In another implementation of this embodiment, the passive-optical locator 32 includes mechanical legs or hovercraft mechanisms which provide the capability to move.

The passive-optical locator 32 receives the operation instructions as signals via communication link 71 from the controller 235. Responsive to the signals, the programmable processor 90 (Figure 1) operates the remotely controlled actuator 200 to rotate the wheels 202 to laterally move the passive-optical range-finder 32 from a first location 249 to a second location 250 in the direction indicated by the arrow 15. The programmable processor 90 (Figure 1) operates the remotely controlled actuator 200 to continuously change an elevation of the optical axis 35 between a first elevation at zero degrees in a position indicated as 35A and a second elevation (at φ_{OA1} degrees in a position indicated as 35B. Thus, as shown in Figure 2, the optical axis 35 rotates upwards from position 35A to position 35B while the vehicle 201 moves towards the second location 250.

In one implementation of this embodiment, programmable processor 90 receives the signals from the wireless transceiver 220 and operates the remotely controlled actuator 200 to rotate the optical axis 35 of the passive-optical range-finder 85 from a first azimuth θ₁ to a second azimuth θ₂. In another implementation of this embodiment, programmable processor 90 receives the signals from the wireless transceiver 220 and operates the remotely controlled actuator 200 to rotate the optical axis 35 of the passive-optical range-finder 85 from a first azimuth θ₁ and a first elevation φ₁ to a second azimuth θ₂ and a second elevation φ₂. In yet another implementation of this embodiment, the programmable processor 90 receives the signals from the wireless transceiver 220 and operates the remotely controlled actuator 200 to laterally move the passive-optical range-finder 28 from a first location 249 to a second location 250 and to rotate the optical axis 35 of the passive-optical range-finder 85 from a first azimuth θ₁ and a first elevation φ₁ to a second azimuth θ₂ and a second elevation φ₂.

When the passive-optical range-finder 85 and/or the optical axis 35 are moved, a new image is focused on the electronic imaging device 66 (Figure 1). In one implementation of this embodiment, the passive-optical locator 32 and the remotely controlled actuator 200 operate to scout for targets 50 in an area that is remote from the controller location 230.

Although a military application is described here in connection with Figure 1, it is to be understood that the passive-optical locator 32 can be used in other applications, including commercial applications.

In one exemplary usage scenario, the object to be located is a person lost on a side of a mountain. In this usage scenario, the passive-optical locator 32 and remotely controlled actuator 200 are deployed as part of a search and rescue party. The controller 235 directs the lateral movements of the passive-optical range-finder 85 via the remotely controlled actuator 200 to go to a site from which the controller 235 directs the optical axis 35 to move in manner that provides a scanning of area of mountain, which is the target. As the passive-optical locator 32 focuses on the mountainside, the target-image information is transmitted via communication link 71 to the controller 235 and an image of mountain "target" are displayed on the display 225 for viewing by a user of the controller 235 at the controller location 230. The images include the geographic location of at least one point in the view. Alternatively, the target-image information is transmitted via communication link 67 to the display 245 at a second location so that images of mountain "target" are displayed on the display 225 for viewing by a user of the display 245. In either case, if the stranded person is seen in one of the received views, the passive-optical locator 32 can focus on the person and determine the geographic location of the person. Other applications include geographical surveying, civil engineering, and navigation.

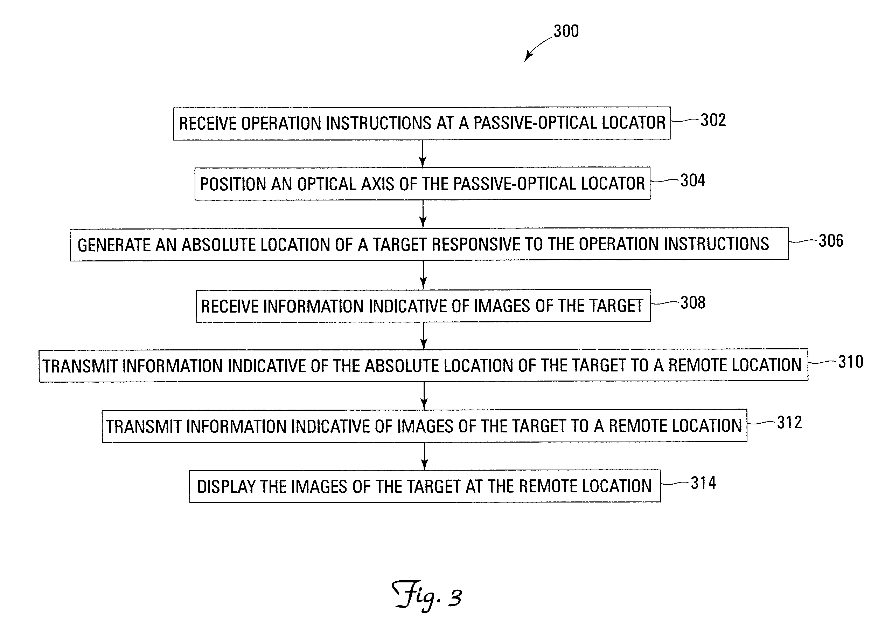

Figure 3 is a flowchart of one embodiment of a method 300 of determining an absolute location of a target and for displaying images of the target 50 at a remote location 230. The embodiment of method 300 is described as being implemented using the passive-optical locator 32 of Figure 1. In such an embodiment, at least a portion of the processing of method 300 is performed by software executing on the programmable processor 90 of the passive-optical locator 32 and/or the GPS/GYRO device 62 or the passive-optical range-finder 85.

At block 302, the passive-optical locator 32 receives operation instructions. The wireless transceiver 220 receives wireless signals on or in which such operation instructions are encoded or otherwise included and inputs the received operation instructions (or data indicative thereof) to the programmable processor 90. In one implementation of this embodiment, the operation instructions include instructions for the passive-optical locator 32 to go to a remote location, such as first remote location 250 (Figure 2). In another implementation of this embodiment, the operation instructions include instructions for the passive-optical locator 32 to rotate the passive-optical range-finder 85 in order to align the optical axis a different azimuth θ and elevation φ. In yet another implementation of this embodiment, the operation instructions include instructions for the passive-optical locator 32 to go to a remote location, such as first remote location 250 (Figure 2) and to rotate the passive-optical range-finder 85 in order to align the optical axis a different azimuth θ and elevation φ.

At block 304, the remotely controlled actuator 200 positions the optical axis 35 of the passive-optical locator 32. The software 120 executing on the programmable processor 90 activates the remotely controlled actuator 200 in response to the received signals, so the remotely controlled actuator 200 moves the optical passive-optical range-finder 85. The positioning the optical axis 35 comprises one of: changing an azimuth θ of the optical axis 35 from a first azimuth θ₁ to a second azimuth θ₂; changing an elevation φ of the optical axis 35 from a first elevation φ₁ to a second elevation φ₂; continuously changing an azimuth θ of the optical axis 35 between a first azimuth θ₁ and a second azimuth θ₂; continuously changing an elevation φ of the optical axis 35 between a first elevation φ₁ and a second elevation φ₂; changing a location of the optical axis 35, such as the latitude Lat_{OA} of the optical axis 35 and the longitude Long_{OA} of the optical axis 35 from a first location (Lat_{OA1}, Long_{OA1}) to a second location (Lat_{OA2}, Long_{OA2}); continuously changing the location (Lat_{OA}, Long_{OA}) of the optical axis 35 between a first location (Lat_{OA1}, Long_{OA1}) and a second location (Lat_{OA2}, Long_{OA2}); and combinations thereof

When the optical axis 35 is positioned, the passive-optical range-finder 85 focuses on the target 50 in the field of view of the passive-optical range-finder 85. At block 306, the passive-optical locator 32 generates an absolute location of the target 50 responsive to the operation instructions. The passive-optical locator 32 generates the absolute location (Lat_{T}, Long_{T}, and Altᵣ) of the target 50 as described in the H0008552 Application.

The passive-optical range-finder 85 generates the distance information and outputs such distance information (or data or signals indicative thereof or data or signals from which distance information can be calculated or otherwise generated) to the software 120 executing on the programmable processor 90. Software 120 executing on the programmable processor 90 then receives information indicative of an azimuth θ and an elevation φ of an optical axis 35 of the passive-optical range-finder 85 and information indicative of the absolute location of the passive-optical locator 32 from the GPS/GYRO device 62. The software 120 executing on the programmable processor 90 then uses one or more trigonometric relationships between the distance R between the passive-optical range-finder 85 and the target 50, the azimuth θ and the elevation φ of the optical axis 35 of the passive-optical range-finder 85, and the absolute location of the passive-optical locator 32 to generate information indicative of the absolute location (Lat_{T}, Long_{T}, and Alt_{T}) of the target 50. The passive optical range-finder 85 is calibrated using the calibration techniques described in the H0008552 Application.

The light from the image of the target 50 is incident on the electronic imaging device 66. The electronic imaging device 66 generates signals at each imaging element (not shown) in the electronic imaging device 66. These signals are information indicative of images of the target 50.

At block 308, the programmable processor 90 receives the information indicative of the images of the target 50. The programmable processor 90 is communicatively coupled to the wireless transceiver 220 and the software 120 executing on the programmable processor 90 sends at least a portion of the information indicative of the images of the target 50 (or information derived therefrom such as a "compressed" version of such image information) to the wireless transceiver 220.

At block 310, the wireless transceiver 220 transmits the information indicative of the absolute location (Lat_{T}, Long_{T}, and Alt_{T}) of the target 50 to the remote location 230 (Figure 1). The information indicative of the absolute location (Lat_{T}, Long_{T}, and AIt_{T}) of the target 50 is transmitted via the communication link 71. In one implementation of this embodiment, the wireless transceiver 220 transmits the information indicative of the absolute location (Lat_{T}, Long_{T}, and Alt_{T}) of the target to the remote location 240 (Figure 1) via communication link 67.

At block 312, the wireless transceiver 220 transmits the information indicative of images of the target 50 to the remote location 230 (Figure 1). The information indicative of the images of the target 50 is transmitted via the communication link 71. In one implementation of this embodiment, the wireless transceiver 220 transmits the information indicative of the images of the target 50 to the remote location 240 (Figure 1) via communication link 67.

At block 314, software executing on the controller 235 displays an image (or other visual representation) of the target 50 at the remote location 230 that is derived from the information received from the wireless transceiver 220. In one implementation of this embodiment, software executing on a processor in the display 245 displays the image of the target 50 at the remote location 240.

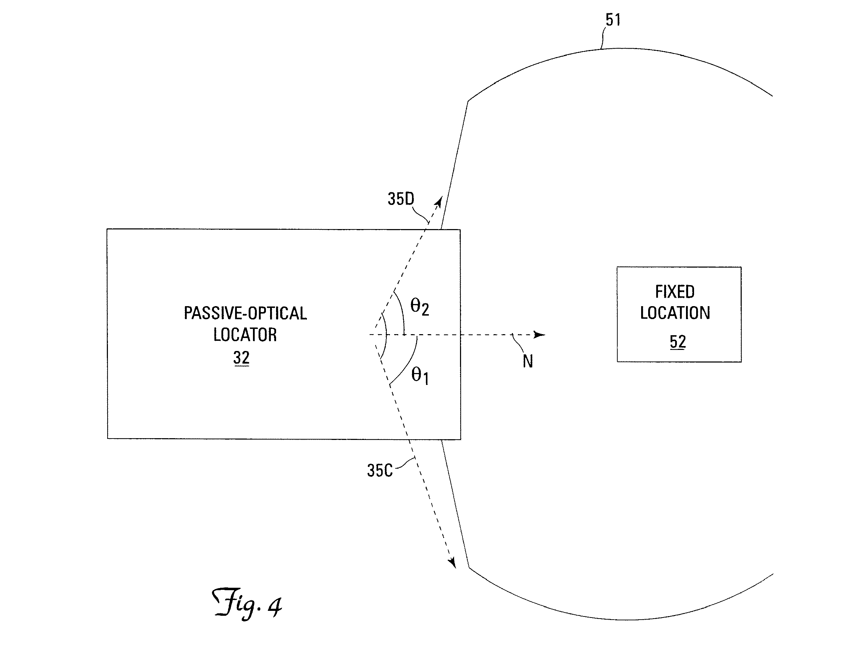

Figure 4 is a block diagram of an implementation of the passive-optical locator 32 in a locale. The operation of the passive-optical locator 32 in Figure 4 is described with reference to the passive-optical locator 32 shown in Figure 1. As shown in Figure 4, the target 50 is a locale generally indicated by the region 51 surrounding a fixed location 52. In order to scan an image of the locale 51, the optical axis 35 of the passive-optical range-finder 85 (Figure 1) rotates from a first position indicated as 35C through the first exemplary azimuth θ₁, past the north direction N, through the second exemplary azimuth θ₂ to the second position indicated as 35D. In one implementation of this embodiment, the optical axis 35 of the passive-optical range-finder 85 (Figure 1) rotates continuously from the first position 35C to the second position 35D and back again to the first position 35C while the electronic imaging device 66 (Figure 1) generates information indicative of an image of the locale 51.

The passive-optical locator 32 generates images of the locale 51 from the information indicative of an image of the locale 51 and compares sequentially generated images. Figures 5A-5B are exemplary sequential first image 55, second image 56, and the third image 57, respectively, of an exemplary locale 51. The exemplary first image 55, second image 56, and the third image 57 represent hills behind the fixed location 52 of a river. The software 120 generates the second image 56 after the first image 55 and after the optical axis 35 of the passive-optical range-finder 85 scans toward the right edge of the field of view of the passive-optical range-finder 85. The first image 55 and the second image 56 are similar and there is no unpredicted change between them. Water movement of the stream consistent with a flow of water is predictable. In one implementation of this embodiment, the passive-optical locator 32 has previously scanned through the angles that generate the images of the first image 55 and the second image 56 and the shape of the hills is predictable from the previous images. In another implementation of this embodiment, information indicative of the images of the locale 51 generated during a first scan of the optical axis 35 from the first position 35C to the second position 35D is stored in the memory 91 for comparison during subsequent scans of the locale 51.

The third image 57 is generated after the second image 56. The software 120 executing on the programmable processor 90 generates the third image 57 after the second image 56 and after the optical axis 35 of the passive-optical range-finder 85 scans toward the right edge of the field of view of the passive-optical range-finder 85. The software 120 determines the unpredicted change in at least a portion 58 of the third image 57 of the locale 51. The exemplary third image 57 includes an image of a vehicle as it moves up hill in the portion 58 of the image 57. The wireless transceiver 220 (Figure 1) transmits information indicative of at least the portion 58 of the image 57 of the locale 51 in which the unpredicted change occurred. In one implementation of this embodiment, the wireless transceiver 220 (Figure 1) transmits information indicative of the absolute location of the portion 58 where the vehicle in the third image 57 is located.

In one implementation of this embodiment, the passive-optical locator 32 focuses on the portion 58 at an increased magnification and the programmable processor 90 transmits information indicative of the magnified image of the vehicle in the portion 58 to the remote location 240. In this exemplary implementation, the magnified image of the vehicle in the portion 58 is displayed on the display 245 for viewing by an observer of the display 245 at the second remote location 240. In this manner a display 245, located at a remote location 240, displays at least one image 57 of at least the portion 58 of the locale 51 in which the unpredicted change occurred.

In one implementation of this embodiment, the passive-optical locator 32 comprises a wireless transceiver 220 that transmits a warning signal to a remote location, such as controller location 230 (Figure 1) and second remote location 240, responsive to at least one unpredicted change in the locale 51.

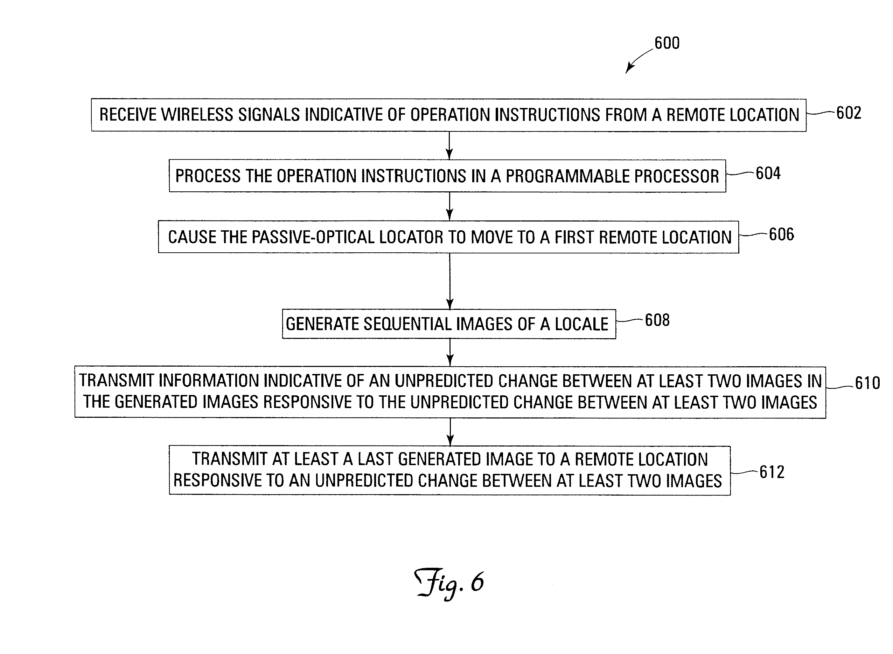

Figure 6 is a flowchart of one embodiment of a method 600 of transmitting information indicative of an unpredicted change in the locale 51 and for displaying images 57 of the locale 51 at a remote location 230. The embodiment of method 600 is described as being implemented using the passive-optical locator 32 of Figure 1 to image the locale 51 of Figure 4 after deployment to a remote location 250 as shown in Figure 2. In such an embodiment, at least a portion of the processing of method 600 is performed by software executing on the programmable processor 90 of the passive-optical locator 32, the electronic imaging device 66, the wireless transceiver 220, and/or the GPS/GYRO device 62 or the passive-optical range-finder 85.

At block 602, the wireless transceiver 220 receives from the controller 235 wireless signals on or in which operation instructions from a remote location 230 are encoded or otherwise included. The wireless signals are transmitted from the controller 235 at the controller location via communication link 71.

At block 604, the operation instructions are processed by the programmable processor 90. The wireless transceiver 220 extracts the operation instructions from the received wireless signals and communicates the operation instructions to the programmable processor 90 and the software 120 executing on the programmable processor 90 stores the operation instructions for subsequent use by the software 120 executing on the programmable processor 90 (for example, in memory 91 and/or in or on storage medium 130). Thereafter, the software 120 executing on the programmable processor 90 processes the operation instructions and carries out (or causes to be carried) one or more actions based on the content of the operation instructions.

At block 606, the software 120 executing on the programmable processor 90, in accordance with the received operation instructions, causes the passive-optical locator 32 to move to a first remote location 250 (Figure 2). In an exemplary implementation of block 606, the operation instructions include instructions indicating that the passive-optical locator 32 should move to a remote location 250 that is within a line of sight of the fixed location 52 (Figure 4). The software 120 determines the direction that the passive-optical locator 32 needs to move in order to proceed from the current location of the passive-optical locator 32 to the remote location 250. In one implementation of this embodiment, the software 120 uses maps of a region between the current location of the passive-optical locator 32 to the remote location 250 to determine the route to follow to proceed to the remote location 250. The maps are stored in the memory 91. When the route is determined by the software 120, the remotely-controlled actuator 200 is activated to move in the direction of the route. In one implementation of this embodiment, the maps are downloaded from the controller 235 to the passive-optical locator 32 with the operation instructions. In another implementation of this embodiment, the route is included in the operation instructions.

In one implementation of this embodiment, as the remotely-controlled actuator 200 is operating to deploy the passive-optical locator 32, the electronic imaging device 66 receives images of the surrounding terrain on the route, and inputs information indicative of the surrounding terrain on the route to the programmable processor 90. In this case, the software executing on the programmable processor 90 revises the route from the current location of the passive-optical locator 32 to the remote location 250 as needed. For example, if a bridge on the original route is damaged or destroyed, the software 120 determines a new route for the passive-optical locator 32 from the current location of the passive-optical locator 32 to the remote location 250.

When the passive-optical locator 32 arrives at the remote location 250, the flow proceeds to block 608. At block 608, the passive-optical locator 32 generates sequential images 55, 56, and 57 (Figures 5A-5C) of the locale 51 (Figure 4). In the exemplary case, the first image 55, second image 56, and third image 57 (shown in Figures 5A-5C, respectively) are generated as the optical axis 35 of the passive-optical range-finder 85 is rotated from position 35C to position 35D. In another implementation of this embodiment, sequential images are generated as the optical axis 35 of the passive-optical range-finder 85 is directed toward the fixed location 52 without moving. The images that are focused on the electronic imaging device 66 causes signals to be generated that include information indicative of images of the locale 51, which is the target 50.

In one implementation of the passive-optical locator 32, electronic imaging device 66 comprises a charge-coupled-devices (CCD) or active pixel sensors (APS). Both APS and CCD technologies input entire frame images to processing electronics so the process is very fast. In this implementation, the target 50 is not necessarily an object, but is a field of view of the locale 51 that can be focused on the electronic imaging device 66. An automated routine searches for the sharpest pixel delineation.

Available detectors arrays in CCDs and APSs are capable of detecting a broadband spectrum including visible light, the near infrared (NIR), and near ultraviolet. In one implementation of this embodiment, the electronic imaging device 66 comprises a plurality of detector arrays that in combination cover all of the above spectral ranges. CCD detectors include Intensified CCD (ICCD), Electron Multiplying CCD (EMCCD), and other associated technologies, such as light intensification and infra-red imagery. Light intensification and infra-red imagery allow for night vision.

The information indicative of images of the locale 51 are input to the programmable processor 90. In one implementation of this embodiment, the software 120 executing on the programmable processor 90 uses pattern matching techniques to determine if there is an unpredicted change in the locale 51, such as the unpredicted change in the portion 58 of the third image 57 of the locale 51. When an unpredicted change is determined by the software 120, information indicative of at least one of the images or information indicative of at least a portion of one of the images is input to the wireless transceiver 220.

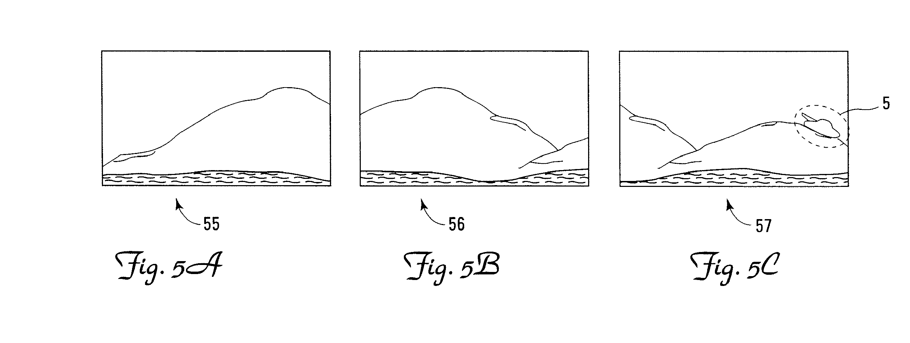

At block 610, the wireless transceiver 220 in the passive-optical locator 32 transmits information indicative of an unpredicted change between at least two images in the generated images responsive to the unpredicted change between at least two images. The passive-optical locator 32 transmits the information to the first remote location 230, the second remote location 240, or both the first remote location 230 and the second remote location 240. In one exemplary implementation, second image 56 in Figure 5B and third image 57 in Figure 5C have an unpredicted change at the portion 58 (Figure 5C). In this case, the software 120 executing on the programmable processor 90 determines the absolute location of the unpredicted change, such as the vehicle moving up the hillside, at the portion 58 and inputs that information to the wireless transceiver 220. Then the wireless transceiver 220 transmits, via communication link 71, the absolute location of the exemplary vehicle as the following information, "UNIDENTIFIED VEHICLE MOVING AT LOCATION LATITUDE # AND LONGITUDE #," or "ENEMY VEHICLE AT DETECTED AT LATITUDE #, LONGITUDE #, AND ALTITUDE #."

At block 612, the wireless transceiver 220 in the passive-optical locator 32 transmits at least a last generated image to the remote location 230 responsive to an unpredicted change between at least two images. In one implementation of this embodiment, the complete field of view of the second image 56 (Figure 5B) and the complete field of view of the third image 56 (Figure 5C). In another implementation of this embodiment, the wireless transceiver 220 in the passive-optical locator 32 transmits the magnified image of the portion 58 responsive to an unpredicted change between the second image 56 and the third image 56.

Thus, the automated imaging function provided by electronic imaging device 66 allows for integration of the passive-optical range-finder 85 with a remotely-controlled actuator 200 in a robotic system. A robotic system that comprises the passive-optical locator 32 is capable of indirect fire and air control, forward observation/spotting and optical surveillance for robotic maneuver teams, long-term staring forward observation/spotting for indirect fire and air control and optical surveillance missions.

The various components of the passive-optical locator 32 are communicatively coupled to one another as needed using appropriate interfaces (for example, using buses, traces, cables, wires, ports, wireless transceivers and the like).

The methods and techniques described here may be implemented in digital electronic circuitry, or with a special-purpose processor or a general-purpose processor such as a computer, firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs). As used here, the devices, such as computers, controller processors, ASICS and memories that are implementing programs, software, algorithms or variants and associated items thereof may be used to denote functions such as neural net(s), artificial intelligence, analog and/or (super)state machines.

A number of embodiments of the invention defined by the following claims have been described. Nevertheless, it will be understood that various modifications to the described embodiments may be made without departing from the spirit and scope of the claimed invention. Accordingly, other embodiments are within the scope of the following claims.

## Claims

1. A system (10) comprising:
a passive-optical locator (32) to generate information indicative of an absolute location associated with a target (50); and
a remotely controlled actuator (200);
wherein the passive-optical locator comprises:
a passive-optical range-finder (85) to generate information indicative of a distance (R) to the target; and
at least one sensor (60) to generate information indicative of an azimuth and an elevation of an optical axis (35) of the passive optical range-finder, wherein the passive-optical locator uses information indicative of a geographic location associated with the passive-optical locator, the information indicative of the distance to the target, and the information indicative of the azimuth and the elevation of the optical axis, the information to determine information indicative of an absolute location associated with the target; and
wherein the remotely controlled actuator is mechanically coupled to the passive-optical locator and remotely positions an optical axis of the passive-optical locator in accordance with one or more operation instructions received at the system.

2. The system (10) of claim 1, further comprising:
a wireless transceiver (220) to receive the operation instructions; and
a programmable processor (90) to generate motion instructions to change a position of the optical axis (35) of the passive optical range-finder (85) responsive to the received operation instructions, wherein the position includes the azimuth and the elevation of the optical axis and an absolute location associated with the optical axis.

3. The system (10) of claim 1 or 2, wherein the at least one sensor (60) generates information indicative of at least one image of the target (50), wherein the wireless transceiver (220) transmits to a remote location (240) one of information indicative of the image of the target, the information indicative of the absolute location of the target, and combinations thereof, the system further comprising:
at least one display (225) to display one of: at least one image of the target; information indicative of the absolute location associated with the target; and combinations thereof, wherein the display is located at the remote location.

4. The system of claim 1 or 2, wherein the target (50) is a locale (51) surrounding a fixed location (52), and wherein the passive-optical locator (32) comprises a wireless transceiver that transmits a warning signal to a remote location (240) responsive to at least one unpredicted change in the locale.

5. The system of claim 4, wherein the wireless transceiver (220) transmits information indicative of at least the portion of the images of the locale (51) in which the unpredicted change occurred, the system further comprising:
a display (245) to display the images of at least the portion of the locale in which the unpredicted change occurred, wherein the display is located at a remote location (240).

6. A method comprising:
receiving operation instructions at a passive-optical locator (32);
positioning an optical axis (35) of the passive-optical locator; and
generating an absolute location of a target (50) responsive to the operation instructions.

7. The method of claim 6, further comprising:
transmitting information indicative of the absolute location of the target (50) to a remote location (240).

8. The method of claim 6, further comprising:
receiving information indicative of images of the target (50); and
transmitting information indicative of images of the target to a remote location (240).

9. The method of claim 8, wherein the remote location is a controller location (230), and wherein receiving operation instructions comprises:
processing the operation instructions in a programmable processor (90); and
causing the passive-optical locator (32) to move to a first remote location (250).

10. A system (10) comprising:
a passive-optical locator (32) to generate information indicative of an absolute location associated with a target (50); and
a remotely controlled actuator (200) that is controlled by one or more operation instructions received at the system;
wherein the passive-optical locator comprises:
a passive-optical range-finder (85) to generate information indicative of a distance (R) to the target; and
a sensor (60) to generate information indicative of an azimuth and an elevation of an optical axis of the passive optical range-finder, wherein the passive-optical locator uses information indicative of a geographic location associated with the passive-optical locator, the information indicative of the distance to the target, and the information indicative of the azimuth and the elevation of the optical axis, the information to determine information indicative of an absolute location associated with the target; and
wherein remotely controlled actuator is mechanically coupled to the passive-optical locator to remotely position an optical axis (35) of the passive-optical locator in response to at least one of the operation instructions.
